# EUROPÄISCHE PATENTSCHRIFT

(11) **EP 0 539 842 B1**
(45) Veröffentlichungstag und Bekanntmachung des Hinweises auf die Patenterteilung: **06.09.1995**
(21) Anmeldenummer: 92117881.0
(22) Anmeldetag: 20.10.1992
(51) Int. Cl.: B24B 19/00, B23Q 3/18

(54) **Schleifvorrichtung für keramische Gegenstände, insbesondere Teller und ähnliches Flachgeschirr**
Grinding apparatus for ceramic objects, especially plates and similar table-ware
Dispositif de meulage pour objet en céramique, en particulier assiettes et vaisselle plate analogue

(30) Priorität: 31.10.1991 DE 9113561 U
(43) Veröffentlichungstag der Anmeldung: 05.05.1993
(73) Patentinhaber: Heinrich Zeidler, Maschinenfabrik GmbH & Co.KG, D-95100 Selb (DE)
(72) Erfinder: Volkmann, Dieter, W-8672 Selb (DE)
(74) Vertreter: Münich, Wilhelm, Dr.

(56) Entgegenhaltungen:
- EP-A- 0 053 417
- EP-A- 0 248 751
- DE-U- 8 717 353
- GB-A- 1 018 221
- GB-A- 2 238 264

## Beschreibung

Die Erfindung betrifft eine dem Oberbegriff des Anspruchs 1 gemäße Schleifvorrichtung für keramische Gegenstände, insbesondere Teller und ähnliches Flachgeschirr.

Eine solche Vorrichtung ist z.B. aus der DE-U-87 17 353 bekannt.

Aus einer von der Anmelderin selbst hergestellten Tellerfußschleifvorrichtung ist es bekannt, mehrere Artikelaufnahmen entlang eines Drehtisches anzuordnen. Jeder Artikelaufnahme sind Greifelemente zugeordnet, die den jeweiligen Artikel so festhalten, daß deren Fuß nach oben zeigt und damit der Schleifvorrichtung zugänglich ist. Die Greifelemente halten und zentrieren den Artikel gleichzeitig, wozu die Fliehkraft bei rotierender Artikelaufnahme ausgenützt wird. Auf Grund der gemeinsamen Anordnung von Artikelaufnahme und Greifelement bzw. Zentrierelement erhöht sich das Gewicht und damit die Antriebs- und Bremsleistung.

Bei einer weiteren Tellerfußschleifmaschine der Anmelderin sind drei Schleifstationen in Reihe mit zwischengeschalteten Zentriervorrichtungen angeordnet, wobei die Teller mit ihrem Fuß auf einem Rundschnurförderer aufliegen. Bei jedem Takt gelangen die Teller von einer Zentriervorrichtung in eine Schleifstation, in der sie von der Schleifvorrichtung angehoben und gegen Mitnehmer mit Vakuumanschluß gedrückt werden. Dieser Mitnehmer saugt den Teller an und beginnt zu rotieren, wobei der Tellerfuß auf dem Schleifband aufliegt und beschliffen wird. Auf Grund der Zwischenschaltung der Zentriervorrichtung erhöht sich zwar die Baulänge der Schleifvorrichtung geringfügig, dafür verringert sich der Leistungsbedarf am Mitnehmer.

Eine weitere Tellerfuß-Durchlaufschleifvorrichtung der Anmelderin betrifft eine lineare Ausführung, bei der zwei Schleifstationen dargestellt sind. Jede der Stationen verfügt über einen Halter, der die Teller an ihrer Oberseite mit Vakuum festhält und unter Rotation den Fuß gegen die Schleifvorrichtung drückt. Jeder Takt des Transportbandes wird von einer Lichtschranke gesteuert, wobei der Tellerrand gegen zwei Rollen aufläuft, die eine Grobzentrierung bei rotationssymmetrischen Tellern ermöglichen.

Aus der GB-A 22 38 264 ist eine Bearbeitungsvorrichtung für keramische Gegenstände, u.a. auch für Teller bekannt. Diese Bearbeitungsvorrichtung besteht aus einer Entstapelvorrichtung für die keramischen Gegenstände, einer Transportvorrichtung, die diese Gegenstände einzeln einer Schleifvorrichtung zuführt und diese nach deren Bearbeitung wieder einer Stapelvorrichtung zuführt. Die Schleifstation besteht aus einer unteren heb- und senkbaren Welle, an deren oberen Ende ein Artikelträger sitzt. Um diese Welle ist eine Artikel-Zentriereinrichtung angeordnet, die vier um Achsen drehbare Rollen beinhaltet. Diese abstandsgleichen und zur Mittelachse der Schleifstation parallelen Rollen sind zu dieser Achse hin und weg bewegbar. Diese zwischen diesen Rollen zentrierten Gegenstände werden von der Welle bzw. der damit verbundenen Kolbenzylindereinrichtung angehoben und aus dem Bereich der Rollen gedrückt, wobei sie zwischen einem starren Artikelträger und einem federnd vorgespannten Artikelträger eingespannt sind. In dieser Stellung, in der die Gegenstände zwischen dem oberen und dem unteren Artikelträger eingespannt sind, erfolgt der Schleifvorgang am unteren Rand der glasierten Geschirrware. Bei diesem Schleifvorgang entfernt das Schleifwerkzeug z.B. die von den drei abstehenden Spitzen einer Crankaufnahme entstandenen Glasuranhäufungen.

Aufgabe der Erfindung ist es, mit möglichst geringem Raumbedarf und technischem Aufwand keramische Gegenstände mit hoher Schleifqualität am Fuß zu beschleifen.

Die Aufgabe ist erfindungsgemäß durch eine Vorrichtung mit den Merkmalen des Anspruchs 1 gelöst.

Damit wird erreicht, daß der Teller exakt zentriert am rotierenden Sauger anliegt, womit auch der Tellerfuß vollkommen zentrisch rotiert und ein einwandfreier Rundschliff erfolgt.

Auf Grund der gleichzeitigen Zentrierung und Beschleifung an einer Stelle kann die Transportgeschwindigkeit zwischen den Schleifstationen wesentlich erhöht werden. Vorteilhaft ist dabei auch das schnelle Heben des Tellers an den Sauger, da der Teller während der Hubbewegung von den Zentrierrollen gestützt ist.

Anhand der Zeichnung wird der Gegenstand der Erfindung näher erläutert. Es zeigen
- Fig. 1: eine Seitenansicht einer Schleifstation
- Fig. 2: eine Draufsicht auf eine Schleifvorrichtung mit zwei Schleifstationen

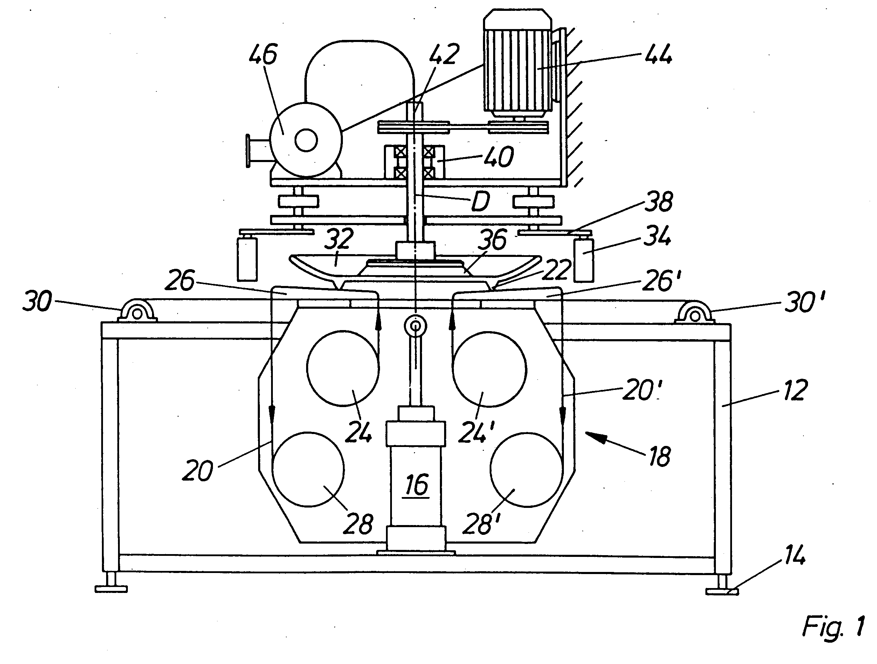

Die in Fig. 1 gezeigte Schleifvorrichtung besteht aus einem Gestell 12 mit höheneinstellbaren Füßen 14. Am Boden ist die Kolbenzylindereinheit 16 befestigt, die eine Schleifstation 18 hebt und senkt. Bei jedem Hub drücken die endlichen Schleifbänder 20, 20' gegen den Tellerfuß 22. Die Schleifbänder 20, 20' laufen taktweise von den Vorratsspulen 24, 24' über die Schleifschuhe 26, 26' auf die Leerspulen 28, 28'. Beiderseits der Schleifschuhe 26, 26' ist je ein Riemen 29, 29' der Fördervorrichtung um zwei Rollen 30, 30' umgelenkt, wobei eine der Rollen mit einem nicht dargestellten Antrieb verbunden ist.

Diese Fördervorrichtung transportiert einen Teller 32 in die Schleifstation, wo sich vier Rollen 34 an den Rand anlegen und den Teller 32 zentrisch zur Achse Z ausrichten, wobei gleichzeitig die Kolbenzylindereinheit die Schleifstation anhebt, bis der Teller 32 am Sauger 36 anliegt. Die Rollen 34 der Zentriervorrichtung lösen sich erst, wenn ein bestimmter (ca. 90%-iger) Wert des Vakuums erreicht ist, der von einem nicht dargestellten Vakuumschalter registriert wird. Gleichzeitig mit dem Lösen der Rollen 34, die über Haltearme 38 und einem Lager 40 mit der Antriebswellen 42 des Saugers 36 verbunden sind, versetzt der Antrieb 44 den Sauger 36 in Rotation, so daß die Schleifbänder 20, 20' den Tellerfuß 22 beschleifen. Die Antriebswelle 42 ist hohl und dient als Rohrleitung zwischen der Vakuumpumpe 46 und dem Sauger 36.

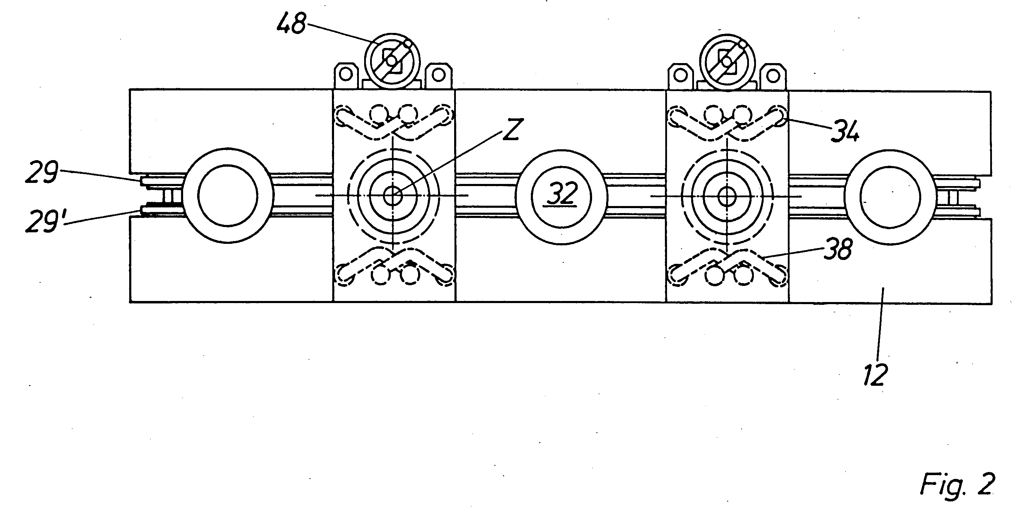

Entsprechend dem Ausführungsbeispiel der Fig. 2 sind zwei Schleifstationen 18, 18' vorgesehen, die mit unterschiedlich groben Schleifbändern 20 bestückt sein können, um einen Grob- und einen Feinschliff am Tellerfuß anzubringen. Die Teller 12 liegen auf Riemen 29, 29' der Fördervorrichtung auf, die entweder automatisch oder manuell bestückt werden. In den Schleifstationen sind die gekröpften Haltearme 38 mit den Rollen 34 in Ruhestellung dargestellt. Der gesamte Oberbau der Schleifvorrichtung, bestehend aus Sauger, Rollen und Antrieb ist mit einer Höheneinstellung verbunden, die mit Handrad 48 auf unterschiedliche Höhen der Gegenstände einstellbar ist. Jede Schleifstation ist durch eine Abdeckung gesichert.

## Patentansprüche

1. Schleifvorrichtung für keramische Gegenstände, insbesondere Teller und ähnliches Flachgeschirr,
mit mindestens einer Schleifstation für den Fuß der Gegenstände, welche einen als Sauger (36) ausgebildeten, drehbar angetriebenen Halter für die Gegenstände und eine darunter angeordnete, mit einem endlichen, taktweise bewegbaren Schleifband und mit einer Hubvorrichtung versehene Schleifeinheit und einen Förderer, der die Gegenstände von einer Aufgabe- zu einer Abgabestation transportiert, aufweist,
**dadurch gekennzeichnet**, daß der Halter mit einem Vakuumschalter zur Einstellung der Haltekraft versehen ist, der beim Erreichen eines bestimmten Wertes eine Zentriervorrichtung betätigt, der Sauger (36) und die aus vier Rollen (34) bestehende Zentriervorrichtung an einer Befestigung oberhalb der Schleifeinheit sitzen und die Rollen (34) eine Höhe aufweisen, die mindestens dem Hub der Schleifeinheit entspricht, wobei die Zentriervorrichtung und der Sauger (36) unabhängig voneinander beweglich sind und die Zentrierachse Z und die Drehachse D der Antriebswelle (42) des Halters übereinstimmen.

2. Schleifvorrichtung nach Anspruch 1,
**dadurch gekennzeichnet**, daß die Zentriervorrichtung ein Wälzlager (40) aufweist, das an der Antriebswelle (42) des Saugers (36) befestigt ist.

## Claims

1. Apparatus for grinding ceramic objects, especially plates and similar flat tableware, comprising
at least one station for grinding the foot of the objects, which includes an object holder designed as suction means (36) and driven so as to rotate, and
a conveyor disposed therebelow, including a non-continuous grinding belt adapted to be moved under clock control, as well as a grinding unit with raising means, which advances the objects from a charging station to a discharging station,
**characterized in** that said object holder is provided with a vacuum switch for adjusting the retaining force, which, as soon as a predetermined level is reached, controls a centering means; that said suction means (36) and said centering means, which is formed by four rollers (34), are disposed at a mount above said grinding unit, and that said rollers (34) have a height which corresponds at least to the stroke of said grinding unit, wherein said centering means and said suction means (36) are mobile independently of each other whilst the centering axis Z and the axis of rotation D of the drive shaft (42) of said object holder are coincident.

2. Grinding apparatus according to Claim 1,
**characterized in** that said centering means includes a rolling bearing (40) which is fastened to the drive shaft (42) of said suction means (36).

## Revendications

1. Dispositif à meuler des objets en céramique, en particulier des assiettes et vaisselle plate analogue, comprenant
au moins un poste à meuler le pied des objets, qui inclut un porte-objet, configuré comme aspirateur (36) et entraîné en rotation, et
un convoyeur disposés en dessous, à une bande abrasive finie, mobile à cadences, ainsi qu'à une unité de meulage à dispositif de levage, qui avance les objets d'un poste de chargement à un poste de décharge,
**caractérisé en ce** que ledit porte-objet est prévu d'un interrupteur à vide à ajuster la force de retenue, qui, dés qu'un niveau donné est atteint, commande un dispositif de centrage; en ce que ledit aspirateur (36) et ledit dispositif de centrage, formé par quatre rouleaux (34), sont disposés à un moyen de fixation au dessus de ladite unité de meulage, et en ce que lesdits rouleaux (34) présentent une hauteur qui corresponde, au moins, à la course de ladite unité de meulage, ledit dispositif de centrage et ledit aspirateur (36) étant mobiles indépendamment l'un de l'autre, pendant que l'axe de centrage Z et l'axe de rotation D de l'arbre d'entraînement (42) dudit porte-objet se trouvent en coïncidence.

2. Dispositif à meuler selon la revendication 1,
**caractérisé en ce** que ledit dispositif de centrage comprend un palier à roulement (40), qui est fixé à l'arbre d'entraînement (42) dudit aspirateur (36).
